# EUROPEAN PATENT APPLICATION

(11) **EP 4 450 215 A1**
(43) Date of publication of application: **23.10.2024**
(21) Application number: 24170495.6
(22) Date of filing: 16.04.2024
(51) Int. Cl.: B23P 15/00, B21B 1/22, B21B 1/38, B21C 47/24, B21D 13/00, B21D 13/04, B21H 8/00, B23K 26/08, B23P 23/00, B21D 5/14, B21D 11/20, B21D 35/00, B32B 15/01, B21D 53/04, F28F 3/04, F28F 3/10

(54) **PLANT AND METHOD FOR MANUFACTURING METAL CAVITY WALLS**

(30) Priority: 19.04.2023 IT 202300007614
(71) Applicant: Favotto, Virginio, 31038 Paese (TV) (IT)
(72) Inventor: Favotto, Virginio, 31038 Paese (TV) (IT)
(74) Representative: Dragotti & Associati S.R.L.

(57) **Abstract**

The present invention relates to a plant **(10)** for manufacturing metal cavity walls **(11)** consisting of a metal base sheet or primary sheet **(14)** and a metal lining sheet or secondary sheet **(18).** The plant **(10)** comprises: a first feeding device **(12)** for the metal base sheet **(14),** a second feeding device **(16)** for the metal lining sheet **(18),** an apparatus **(20)** for arranging the metal base sheet **(14)** and the metal lining sheet **(18)** superimposed on each other, keeping them pressed together and aligned so as to form an assembly **(21),** and a bending device **(22)** for bending the assembly formed by the metal base sheet **(14)** and the metal lining sheet **(18).**

In accordance with the invention, the plant comprises a welding device **(24)** designed to spot-weld or continuously weld together the metal base sheet **(14)** and the metal lining sheet **(18)** of the assembly **(21)** along their facing surfaces and along the corresponding perimeter, so as to form a sealed metal cavity wall **(11);** the welding device **(24)** being positioned facing the bending device **(22).**

The invention also relates to a method for manufacturing metal cavity walls.

## Description

The present invention relates to a plant for manufacturing metal cavity walls. In particular, the present invention relates to a plant for manufacturing metal cavity walls intended for the construction of cylindrical containers of varying diameter, such as tanks, cisterns, autoclaves and the like.

The present invention also relates to a method for manufacturing metal cavity walls. Cylindrical containers or tanks of varying diameter comprising a cylindrical shell with a cavity wall, which is closed at the opposite ends by two cap-shaped base plates, are known.

These tanks are generally used for storing alimentary liquids such as wine, milk or beer. However, they may also be used to store non-alimentary liquids.

The cavity wall of the cylindrical shell is intended to be filled, depending on the usage, with a second liquid which has the function of cooling or heating the liquid stored or present inside the tank.

In detail, the cavity wall is formed by welding together two metal sheets: a base sheet or primary sheet, which has a thickness usually of between 2.0 and 6.0 mm, and a lining sheet or secondary sheet, which has a thickness usually of between 0.5 and 1.0 mm.

The base sheet forms the inner side of the cavity wall, while the lining sheet forms the outer side thereof.

Welding together of the base sheet and the lining sheet is usually performed by means of a welding process, for example resistance welding, TIG welding or laser welding.

The two sheets are joined together by means of a continuous weld along their external perimeter and by means of spot welding or continuous welding along their facing surfaces. In this way the two sheets are sealed peripherally and at the same time they are joined together locally along their facing surfaces so as to define the cavity wall which during use will be filled by the cooling or heating liquid or gas.

The base sheet and the lining sheet are usually welded by placing them on top of each other on a work surface with their perimeters coinciding.

It is of fundamental importance to keep the two sheets properly positioned in order to prevent them from becoming misaligned before welding is performed.

At the same time it is necessary to ensure that the tensions resulting from welding do not subsequently cause the two sheets to become misaligned or uncoupled from each other.

In the known welding plants, the surface on which the sheets are placed is provided with locking blocks which are pressed against the sheets and keep them locked in position so as to prevent any movements which could occur before or during welding. These plants, while being favourably regarded, have a number of drawbacks.

A first drawback consists in the fact that the dimensions of the plant must be at least equal to the length of the sheets to be welded. In the case where welding of the sheets is performed in order to obtain a cylindrical shell of a tank for storing wine, the length of the sheets, and consequently of the support surface, will not be less than 12 metres.

Taking into account, moreover, the accessory equipment needed to move the sheets before they are rested on the work surface and the dimensions of the welding head, it is obvious that this plant will occupy a very large amount of space.

In some cases, in order to overcome this problem, it is preferred to use a plurality of cavity walls with a length smaller than that which is required. These cavity walls are then joined together end-to-end so as to reach the final desired size.

It is obvious, however, that with this method, if on the one hand it is possible to reduce the dimensions of the plant, on the other hand additional welding operations must be performed.

Furthermore, in the plants of the known type, it is also difficult to move the cavity wall manufactured by welding together the two sheets.

This problem also arises in the case where calendering is performed before transportation, since in any case the article has bulky dimensions.

A further drawback is also associated with the said calendering operation, since during the transition from a flat configuration, in which the two sheets are joined together, into a curved configuration, in which the cavity wall is installed on-site, tensions are generated in the structure of the cavity wall, in particular in the lining sheet.

These tensions may cause deformations and in particular may result in an irregular thickness of the cavity wall.

In particular, the smaller the diameter of the tank and the greater the thickness of the base sheet or "primary" sheet, the smaller will be the passage for the cooling or heating liquid, with a consequent loss of thermal efficiency.

The general object of the present invention is to overcome the drawbacks of the prior art.

In particular, a first task of the present invention is to provide a plant for manufacturing metal cavity walls which has smaller dimensions.

Furthermore, a further task of the present invention is to provide a plant for manufacturing metal cavity walls which allows easy movement of the end product.

Finally, a task of the present invention is to provide a method for manufacturing metal cavity walls which is able to reduce the processing times and improve the quality of the product obtained.

The object and tasks indicated above are achieved by a plant according to Claim 1 and by a method according to Claim 14.

The characteristic features and further advantages of the invention will emerge from the description, provided hereinbelow, of a number of examples of embodiment, provided by way of a non-limiting example, with reference to the attached drawings in which:
- **FIG. 1** shows a schematic plan view of the plant according to the invention;
- **FIG. 2** shows a view, on a larger scale, of the detail of **FIG. 1** indicated by the letter A;
- **FIG. 3** shows a view, on a larger scale, of the detail of **FIG. 1** indicated by the letter B;
- **FIG. 4** shows a cross-sectional view along the plane indicated by IV-IV in **FIG. 2****;**
- **FIG. 5** shows in schematic form a possible arrangement of the welding points which can be obtained with the plant according to **FIG. 1****;**
- **FIG. 6** shows a cross-sectional view along the plane indicated by **VI-VI** in **FIG. 5****;**
- **FIG. 6A** shows in schematic form a detail of a cavity wall which can be obtained with the plant according to the present invention;
- **FIG. 7** is similar to **FIG. 5****,** but shows a further arrangement of the welding points which can be obtained with the plant according to **FIG. 1****;**
- **FIG. 8** shows a cross-sectional view along the plane indicated by **VIII-VIII** in **FIG. 7****.** With particular reference to the attached **FIG. 1****,** a plant for manufacturing metal cavity walls according to the invention is denoted overall by the reference number **10.**

Said plant **10,** in particular, is designed to manufacture metal cavity walls **11** suitable for being used for the production of cylindrical shells of metal containers of varying diameter, such as tanks, cisterns and the like.

In a known manner, said metal containers comprise a cylindrical shell and a pair of base plates welded to the opposite openings of the shell.

Even more particularly, the plant **10** is designed to manufacture metal cavity walls **11** formed by a metal base sheet or primary sheet **14** and by a metal lining sheet or secondary sheet **18,** intended to be used to form shells of heat-regulated containers. Said cavity walls **11,** in a known manner, are intended during use to be inflated so as to create a through-flow section between the metal base sheet **14** and the metal lining sheet **18** for a cooling or heating liquid or gas.

The metal base sheet **14** usually has a thickness of between 2.0 and 6.0 mm, while the metal lining sheet **18** has a thickness of between 0.5 and 1.0 mm. The metal base sheet **14** and the metal lining sheet **18** are preferably made of steel, even more preferably of stainless steel.

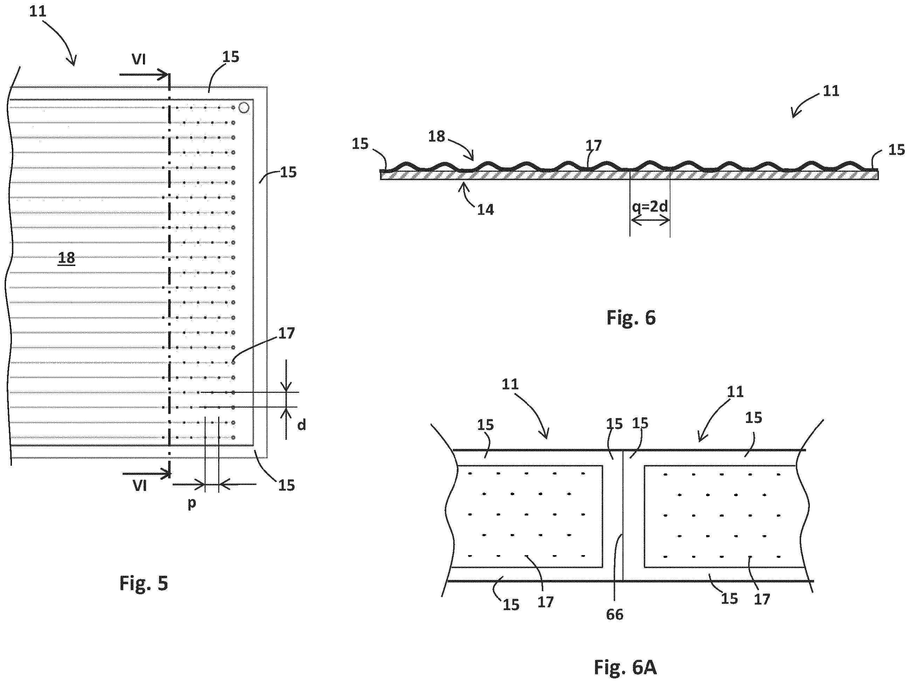

In particular, as schematically shown in **FIGS. 5-8****,** the two sheets **14, 18** are welded continuously along their perimetral edges so as to form a peripheral seal **15.** At the same time, the two sheets **14, 18** are also spot-welded together, i.e. are welded at points on their facing surfaces so as to obtain joining points **17** arranged, preferably, at a given distance **d** and with a given pitch **p.** The distance **d** and the pitch **p** of the joining points **17** are chosen depending on the use of the cavity wall **11,** so as to create a circuit inside the cavity wall in which there are no preferential paths.

The joining points **17** are arranged on the inside of the peripheral seal.

Alternatively, the metal base sheet **14** and the metal lining sheet **18** may also be welded continuously along their facing surfaces. In this way preferential paths may be created inside the cavity wall.

Continuous welding is not shown in the attached figures since it is well-known to the person skilled in the art.

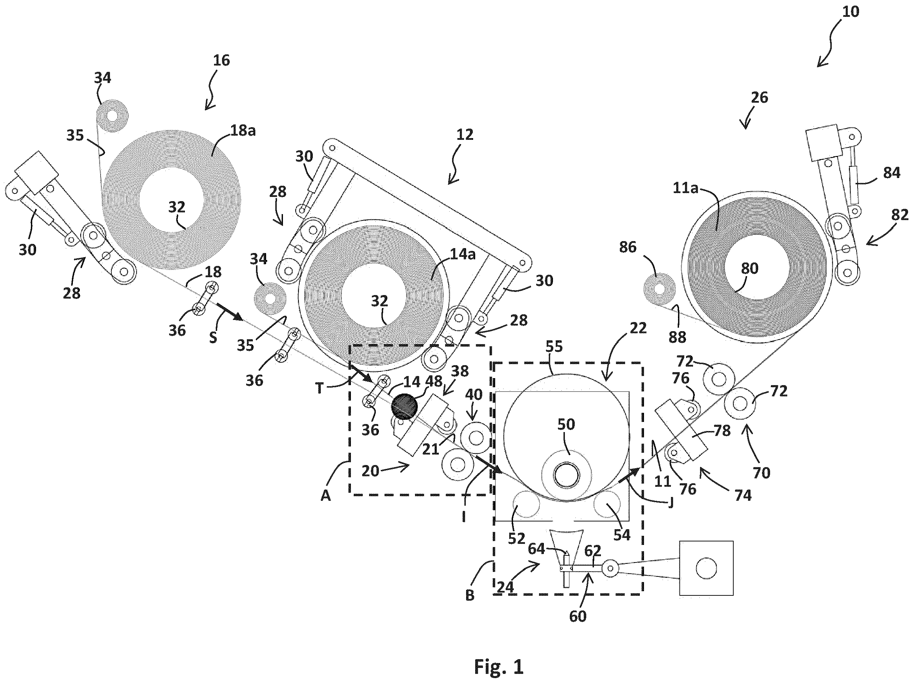

Obviously, with reference to the internal spot-welding, **FIGS. 5-7** show only some possible arrangements of the welding points which can be obtained with the plant **10.** With reference to **FIG. 1****,** the plant **10** comprises a first feeding device **12** for the metal base sheet **14.** Said base sheet **14** is preferably supported in a vertical position and is fed forwards along a feeding direction **T.**

The base sheet **14** is intended, during use, to define the inner side of the cavity wall **11,** namely the side in contact with the liquid contained in the receptacle comprising the cavity wall **11.**

The plant **10** also comprises a second feeding device **16** for the metal lining sheet **18.** Advantageously, the second feeding device **16** is adjustable heightwise.

The lining sheet **18,** in a manner similar to the base sheet **14,** is preferably supported in a vertical position and is moved forwards along a feeding direction **S.**

During use, the lining sheet **18** is intended to define the outer side of the cavity wall **11,** i.e. the side directed towards the external environment.

The plant **10** also comprises an apparatus **20** for arranging the metal base sheet **14** and the metal lining sheet **18** superimposed on each other, keeping them pressed and aligned, so as to form an assembly **21.**

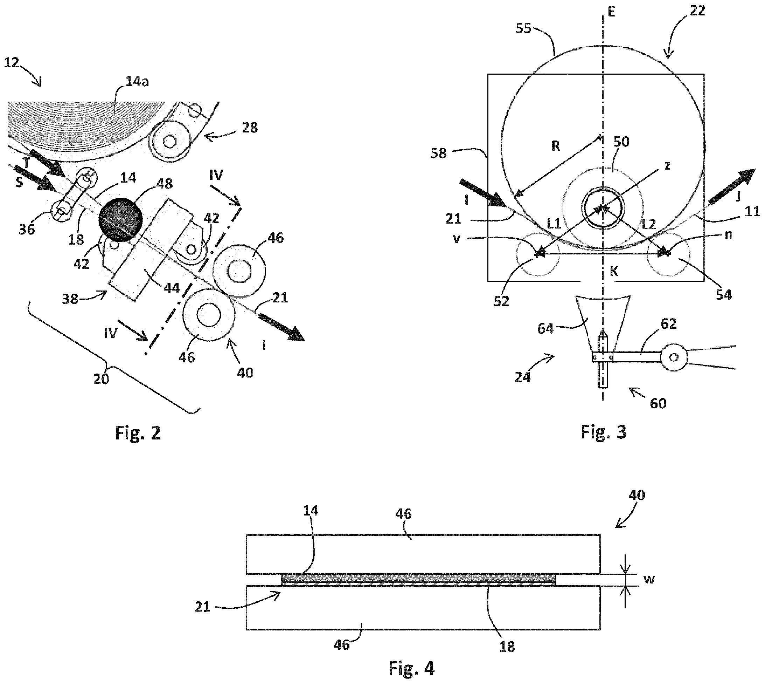

The term "superimposed", for the purposes of the present invention, is understood as meaning that the feeding direction **T** of the base sheet **14** and the feeding direction **S** of the lining sheet **18,** after they have passed through the apparatus **20,** coincide so that it is possible to identify a single feeding direction **I** (see **FIG. 2**). Said feeding direction I identifies the feeding direction of the assembly **21.**

The term "aligned", for the purposes of the present invention, is understood as meaning that the side edges of the base sheet **14** are substantially parallel to the side edges of the lining sheet **18** along the direction of feeding of the two sheets **14, 18.**

The base sheet **14** and the lining sheet **18** preferably have a different height, where "height" is understood as meaning the distance measured perpendicularly with respect to the direction of extension of the sheets. The lining sheet or secondary sheet **18** has preferably a height smaller than that of the base sheet or primary sheet **14.**

Consequently the height of the assembly **21** formed by the two sheets **14, 18** corresponds usually to the height of the base sheet **14.**

With reference to **FIG. 1****,** the plant **10** further comprises a bending device **22** for bending the assembly **21** formed by the metal base sheet **14** and by the metal lining sheet **18.**

In accordance with the invention, the plant **10** also comprises a welding device **24** designed to spot-weld or continuously weld the metal base sheet **14** and the metal lining sheet **18** of the assembly **21** along their facing surfaces and along the corresponding perimeter, so as to form the sealed metal cavity wall **11.** Below the expression "metal cavity wall" **11** is understood as meaning the assembly formed by the base sheet **14** and by the lining sheet **18** once they have been welded together. In particular, the welding device **24** is positioned facing the bending device **22** so that the assembly formed by the metal base sheet **14** and by the metal lining sheet **18** is intended, during use, to advance between the bending device **22** and the welding device **24.**

As will become clear from the description below, the arrangement of a welding device **24** facing the device **22** for bending the assembly **21** formed by the two sheets **14, 18** enables the dimensions of the entire plant **10** to be reduced, since the welding and the spot-welding of the sheets **14, 18** forming the cavity wall **11** no longer is performed when arranged flat, but once the two sheets **14, 18** have already been bent.

Furthermore, the arrangement of the welding device **24** facing the bending device **22** means that the two sheets **14, 18** may be welded and spot-welded together in a curved configuration. As will be clarified below, this means that the lining sheet or secondary sheet **18,** once the cavity wall **11** has been formed, may be easily spaced from the base sheet **14,** so as to create a wide passage useful for heat exchange and for reducing the pressure drops when a cooling liquid is used.

As will be described in detail below, the plant **10** may advantageously comprise a winding device **26,** preferably of the motorized type, for winding up the metal cavity wall **11.** Said device **26** is positioned downstream of the bending device **22** and the welding device **24.** Said device **26** allows the cavity wall **11** obtained after the welding operations to be wound up, with the advantage that said cavity wall **11** may easily be transported and handled.

The winding device **26** has the function of pulling the cavity wall **11** coming out of the welding device **24** and the bending device **22** and winding it up so as to form a coil (reel) of sheet metal.

Advantageously, the coil wound up on the winding device **26** will in fact be formed by a series of cavity walls **11** with predefined dimensions, which are joined together end-to-end and which will subsequently be cut to size.

Below the various components of the plant **10** are described.

As can be seen in **FIG. 1****,** the first feeding device **12** and the second feeding device **16** comprise preferably a device for unwinding a sheet metal coil. In this way, both the metal base sheet **14** and the metal lining sheet **18** may be provided in the form of metal coils **14a, 18a.** In this way, the plant **10** advantageously allows a coil formed by the cavity wall **11** to be obtained as the end result, starting from two separate coils **14a, 18a,** i.e. starting from the coil **14a** comprising the base sheet **14** and the coil **18a** comprising the lining sheet **18.**

The devices **12, 16** for unwinding the sheet metal coils **14a, 18a** may be arranged with their axis vertical or with their axis horizontal. Preferably, the unwinding devices **12, 16** are arranged with their axis vertical. The devices **12, 16** may be idle or motorized. Preferably, the devices **12, 16** are provided with suitable adjustable brakes.

Advantageously, the devices **12, 16** are designed to support drums **32** of different sizes. Alternatively, the devices **12, 16** may be provided with a variable-geometry drum **32** provided with tensioning shells onto which the sheet metal coil **14a, 18a** will be directly wound.

Preferably, the first device **12** for unwinding the **coil 14a** and the second device **16** for unwinding the coil **18a** are provided with at least one sheet-pressing arm **28** having the function of guiding unwinding of the coils **14a, 18a.**

In the embodiment shown in **FIG. 1** the first device **12** for unwinding the coil **14a** is advantageously provided with first and second sheet-pressing arms **28** arranged on opposite sides of the coil **14a.**

Preferably, the sheet-pressing arms **28** may be moved towards and away from the respective coils **14a, 18a** by means of pneumatic or hydraulic actuators **30.**

In the case where the unwinding devices **12, 16** are arranged with their axis horizontal, the sheet-pressing arms may be replaced, if necessary, by lateral containment or guiding arms.

Preferably, each sheet unwinding device **12, 16** is provided with a rotating paper-winding device **34** for allowing winding up and recovery of the paper **35** provided in order to separate and protect the various layers of sheet metal in the coil **14a, 18a.** As mentioned, the base sheet **14** and the lining sheet **18** are fed forwards inside the plant **10** along a direction **T** and along a direction **S,** respectively.

Preferably, the plant **10** is provided with a plurality of support guides **36** for supporting and guiding the base sheet **14** and the lining sheet **18** along the output path from the respective unwinding devices **12, 16** in the directions **T** and **S.**

These support guides **36** may comprise a pair of rolls arranged with their axis vertical and spaced from each other so as to define a passage for the sheets **14, 18.** The pairs of rolls are arranged so that the straight line which joins the respective centres is substantially perpendicular to the direction of feeding of the sheets **14, 18.**

The apparatus **20** for arranging the base sheet **14** and the lining sheet **18** superimposed on each other, keeping them pressed together and aligned, comprises preferably a wrinkle-breaker or alignment device **38** and a motorized sheet driving device **40.** As shown in **FIGS. 1** and **2****,** the wrinkle-breaker or alignment device **38** is preferably situated upstream of the motorized sheet driving device **40.**

As shown in detail in **FIG. 2****,** the wrinkle-breaker or alignment device **38** is advantageously formed by a pair of rolls **42** with parallel - preferably vertical - axes arranged on opposite sides of a support frame **44.**

The two rolls **42** are, moreover, arranged on opposite sides with respect to the direction of feeding **I** of the assembly **21** formed by the base sheet **14** and the lining sheet **18** so as to press against said assembly **21** on the top and bottom thereof. The function of the wrinkle-breaker or alignment device **38** is to ensure that the two sheets **14, 18** forming the cavity wall **11,** once they have exited the respective feeding devices **12, 16,** assume the programmed relative position before welding.

At the same time, the wrinkle-breaker or alignment device **38** has the function of aligning and introducing into the driving device **40,** positioned downstream of the wrinkle-breaker or alignment device **38,** the assembly formed by the two sheets. Said device **40** has, in turn, the function of feeding forwards the assembly **21** formed by the two sheets **14, 18** towards the bending device **22.**

With reference to **FIG. 2****,** the driving device **40** is preferably composed of two cylindrical rolls **46** arranged parallel to each other. The assembly **21** is intended to pass between the two cylindrical rolls **46,** being driven by them.

Advantageously, the cylindrical rolls **46** are adjustable and positioned so that the distance between respective side surfaces is equal to or less than the thickness **w** of the assembly **21** (see **FIG. 4**).

Either one or both the cylindrical rolls **46** may be motorized. Advantageously, the motors, which are not visible in the attached figures, activate directly either one or both the cylindrical rolls **46.** In the case where both the rolls **46** are motorized, one of the rolls will be connected to the motor by means of a special coupling or by means of a twin gearmotor.

The cylindrical rolls **46,** in addition to allowing feeding of the assembly **21** inside the plant **10,** ensure that the two sheets **14, 18** are kept superimposed and aligned, so as to facilitate the following welding operations, without the need to provide further stops or locking means.

As can be seen in **FIG. 2****,** a second welding device **48,** for example a vertical welding beam, intended to perform a weld between adjacent end portions of different base sheets **14** exiting the feeding device **12,** may be advantageously arranged upstream of the wrinkle-breaker or alignment device **38,** so as to obtain single base sheet coil **14.**

In this way it is possible to provide a base sheet **14** with different sizes so as to obtain, once the base sheet **14** has been joined together with the lining sheet **18,** cavity walls **11** in the number and with the size required.

With reference to **FIGS. 1** and **3****,** the bending device **22,** in turn, preferably comprises a fixed or movable roll **50,** a front side roll **52** and a rear side roll **54.** The side rolls **52, 54** are advantageously arranged on opposite sides of the fixed or movable roll **50.** These rolls **50, 52, 54** may also be arranged with their axis vertical or horizontal. In particular, the fixed or movable roll **50** is preferably positioned aligned, relative to a reference axis **E,** with the welding device **24.** The front side roll **52** is positioned upstream of the welding device **24** and the rear side roll **54** is positioned downstream of the welding device **24.**

In other words, the front side roll **52** is arranged on the side where the assembly **21** to be bent is inserted into the bending device **22** and, in combination with the fixed or movable roll **50,** acts on the assembly **21** before welding together of the sheets **14, 18** is performed.

Similarly, the rear side roll **54** is arranged on the opposite side to the side where the assembly **21** is inserted into the bending device **22** and, in combination with the fixed or movable roll **50,** acts on the cavity wall **11,** before and after the welding together of the sheets **14, 18** is performed. The assembly **21** at the inlet into the bending device **22** advances along a direction **I,** while the cavity wall **11** exiting the bending device **22** advances along a direction **J.** The direction **I** and the direction **J** are not parallel to each other and preferably form an acute angle.

Advantageously, at least either one of the front side roll **52** and the rear side roll **54** is a motorized roll so as to be able to rotate about a respective longitudinal axis **v, n** (see **FIG. 3**).

Like the roll **50,** the side rolls **52, 54** may be movable. Preferably, as it is well-known according to the state of the art, only the roll **50** or only the side rolls **52, 54** are movable independently of each other.

Advantageously, the front and rear side rolls **52, 54** are mounted movable on a frame **58** so as to be able to be displaced away from or towards the fixed or movable roll **50.** Advantageously, the front and rear side rolls **52, 54** may be displaced along straight or curved trajectories.

Said rolls **52, 54** may be moved by means of respective hydraulic or mechanical screw actuators and are preferably guided by means of special straight or curved guiding means.

The movements of the rolls **52, 54** are preferably managed by means of an electronic control unit of the known type, not visible in the attached figures.

With reference to **FIG. 3****,** the distance **L1** between the longitudinal axis **v** of the side roll **52** and the longitudinal axis **z** of the roll **50** determines the curvature of the assembly **21** before the two sheets **14, 18** are welded together.

The distance **L2** between the longitudinal axis **n** of the side roll **54** and the longitudinal axis **z** of the roll **50** determines the curvature of the cavity wall **11** obtained following the welding operation.

The greater the distance **L2** the smaller will be the curvature. Advantageously, the curvature of the cavity wall **11,** obtained following the welding operation, is chosen with a smaller diameter than the design diameter of the tank. In this way the spacing between the base sheet and the lining sheet is facilitated, without having to introduce under high pressure the gas or liquid used to perform spacing of the two sheets, before the subsequent installation of the tank.

In detail, the assembly to be bent **21,** formed by the base sheet **14** and the lining sheet **18,** is intended to pass between the side rolls **52, 54** and the roll **50.** In this way, the two sheets **14, 18** are kept clamped between the side rolls **52, 54** and the movable or fixed roll **50,** thus avoiding, in combination with the pulling action exerted by the winding device **26,** possible slipping and misalignment. The action performed by the bending device **22** is of fundamental importance for allowing the joining together of the primary and secondary sheets by means of welding.

**FIG. 3** shows a configuration of the bending device **22** in which the distance **L1** is substantially the same as the distance **L2.** In this configuration, the curvature imparted to the assembly **21** is substantially the same as the curvature imparted to the cavity wall **11.** Different configurations may in any case be obtained using the plant **10.**

In **FIGS. 1** and **3****,** the reference number **55** indicates schematically the hypothetical average circumference of the cavity wall **11** once it has been wound up. By varying the distances **L1** and **L2** and also the distance **K** between the longitudinal axes **v, n** of the side rolls **52, 54,** it is possible to vary the radius **R** of the hypothetical circumference **55.**

The welding device **24,** in turn, preferably comprises a welding robot **60.** Said robot **60** may be of the Cartesian type, i.e. with three degrees of freedom, or of the anthropomorphic type, and therefore with six degrees of freedom.

Alternatively, the welding robot **60** may be mounted on a controlled-axis system.

**FIGS. 1** and **3** schematically show a welding robot of the anthropomorphic type provided with an arm **62** at the end of which the welding head **64** is mounted.

The welding head **64** is preferably aligned with the axis **E.**

Preferably, the welding device **22** is of the type suitable for performing laser welding. The plant **10** may, however, be provided with welding devices **22** suitable for performing different types of welding, for example resistance welding or TIG welding. The movements of the welding robot **60,** be it of the Cartesian or anthropomorphic type, are controlled by an electronic control unit, for example a PLC (programmable logic controller). Said unit is not visible in the attached figures.

The operator, by means of the PLC or a preloaded drawing, of the type used in numerical control systems, is able to set the pitch **p** and the distance **d** of the joining points **17** which join together the base sheet **14** and the lining sheet **18,** as well as the dimensions of the peripheral seal **15.** Alternatively, in the case of continuous internal welding, the operator is able to define the dimensions of the internal channels.

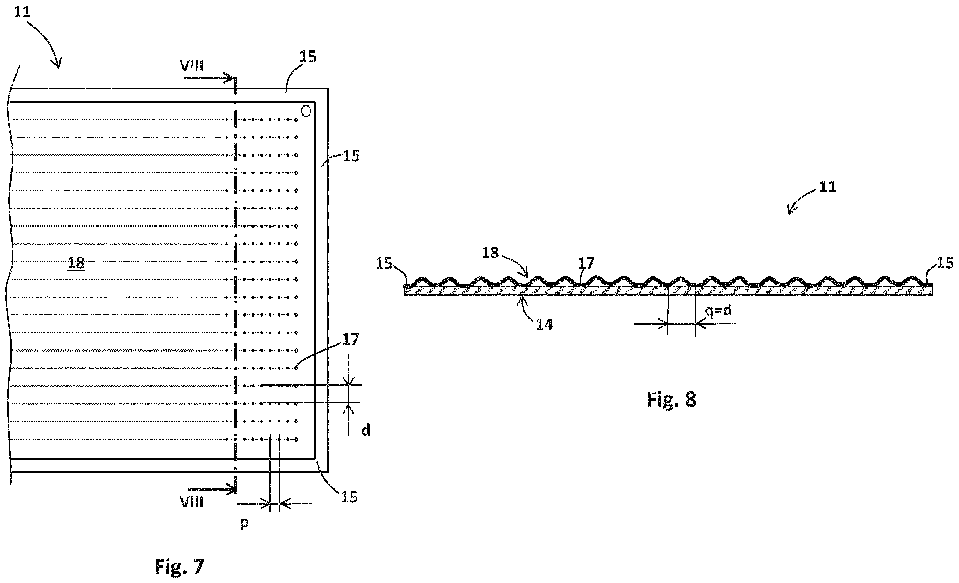

For example, by means of the welding robot **60,** it is possible to obtain the configuration of the joining points **17** shown in **FIGS. 5-6****,** i.e. a so-called honeycomb configuration, in which the joining points **17** are arranged staggered with respect to each other, or the configuration shown in **FIGS. 7-8****,** in which the joining points **17** are arranged aligned with each other.

In the first configuration, the distance **q** between two joining points **17,** measured along a transverse direction, is equal to twice the distance **d** between the longitudinal rows of the joining points **17.**

In the second configuration, the distance **q** is the same as the distance **d.**

With the plant **10** according to the invention it is, however, possible to provide different configurations of the peripheral seal **15** and the joining points **17.**

In the case where the plant **10** is fed with sheet metal **14, 18** in the form of a coil **14a, 18a,** in the welding device **24** it is also possible to provide a demarcation line **66** between the two end portions of two adjacent cavity walls **11,** depending on the measurement of the cavity wall required **(****FIG. 6A****).** The cavity wall **11** will subsequently be cut along said demarcation line **66.** In this way, as mentioned, different programmed and pre-measured cavity walls **11** may be wound up as a single coil in the device **26** and then may be cut directly on-site using flexible plasma or another cutting system.

Alternatively, the plant **10** may also comprise a vertical cutting device (not shown in the attached figures since well-known), for example of the plasma type, for cutting the sheets **14, 18** when the dimensions suitable for obtaining the required cavity wall **11** are reached.

As shown in the attached figures, the plant **10** may also comprise, in addition to the first driving device **40,** a second driving device **70** positioned downstream of the welding device **22.**

The second driving device **70** has the function of conveying and feeding the cavity wall **11** towards the winding device **26.**

With reference to **FIG. 1****,** the second driving device **70** is preferably composed of two cylindrical rolls **72** arranged parallel to each other. The cavity wall **11** is intended to pass between the two cylindrical rolls **72,** being retained or, to use the technical term, "pinched" and being driven by them.

Preferably, either one or both the cylindrical rolls **72** may be motorized. Advantageously, the motors, which are not visible in the attached figures, activate directly either one or both the cylindrical rolls **72.** In the case where both the rolls **72** are motorized, one of the rolls will be connected to the motor by means of a special coupling or by means of a twin gearmotor.

Preferably, the power of the motor for driving the rolls **72** is greater than the power of the motor for driving the rolls **46** of the first driving device **40.** The cavity wall **11,** in fact, offers greater resistance to feeding than the sheets **14, 18** when they are not welded together.

The cylindrical rolls **72** of the second driving device **70,** in addition to performing feeding of the cavity wall **11** inside the plant **10,** impart a curvature - albeit of a minimal nature - to the cavity wall **11** so as to favour the subsequent winding-up thereof in the device **26.**

Advantageously, the plant **10** may comprise a device for brushing or cleaning the cavity wall **11** exiting the bending device **22.** Said brushing or cleaning device may act on the inner side or outer side of the cavity wall **11** and may be incorporated in the second driving device **70.**

Preferably, if necessary, the plant **10** may comprise a second wrinkle-breaker device **74** (see **FIG. 1**).

Said second wrinkle-breaker device **74** is arranged between the bending device **22** and the second driving device **70.**

In a similar way to the first wrinkle-breaker device **38,** said second wrinkle-breaker device **74** is advantageously formed by a pair of rolls **76** with parallel - preferably vertical - axes, arranged on opposite sides of a support frame **78.**

The two rolls **76** are, moreover, arranged on opposite sides with respect to the direction of feeding **J** of the cavity wall **11,** so as to press against the cavity wall **11** on the top and on the bottom thereof.

Advantageously, the second wrinkle-breaker device **74** has the function of conveying and feeding the cavity wall **11** along the direction **J** towards the winding device **26.** The winding device **26** preferably comprises a device for winding up a sheet metal coil. In this way, the cavity wall **11** exiting the bending device **22** may be wound up on said device so as to be supplied preferably in the form of a metal coil **11a.** Advantageously the winding device **26** may be arranged with its axis vertical or with its axis horizontal. Preferably, the winding device **26** is arranged with its axis vertical. In a similar manner to the unwinding devices **12, 16,** the winding device **26** may be idle or motorized.

Advantageously, the winding device **26** is designed to support a drum **80** of varying dimensions, depending on the height of the base sheet **14.** Alternatively, the winding device **26** may be provided with a variable-geometry drum **80** which has tensioning shells onto which the cavity wall **11** will be directly wound in the form of a reel **11a.** Preferably, the winding device **26** for winding up the reel **11a** is provided with at least one sheet-pressing arm **82** having the function of guiding the winding-up of the reel **11 a.**

The sheet-pressing arm **82** may move towards and away from the coil **11a** by means of an actuator **84** preferably of the hydraulic or pneumatic type.

Advantageously, the sheet-winding device **26** is provided with a rotating paper-unwinding device **86** for allowing a sheet of paper **88** to be inserted between the various sheet metal layers in the coil **11a.**

The paper may be replaced by sheets of polymer material, such as PVC.

As mentioned, the present invention also relates to a method for manufacturing metal cavity walls **11** consisting of a metal base sheet **14** and a metal lining sheet **18.**

This method comprises the following steps:
- feeding the metal base sheet **14** by means of a first device **12** for unwinding a sheet metal coil **14a;**
- feeding the metal lining sheet **18** by means of a second device **16** for unwinding a sheet metal coil **18a;**
- superimposing the metal base sheet **14** and the metal lining sheet **18,** keeping them pressed and aligned so as to form an assembly **21;**
- bending the assembly **21** formed by the metal base sheet **14** and the metal lining sheet **18;**
- welding the assembly **21** so that the metal base sheet **14** and the metal lining sheet **18** are spot-welded at points **17** or continuously welded together along their facing surfaces and along the corresponding perimeter **15** so as to form a sealed metal cavity wall **11** of predefined length.

The points **17** are arranged inside the peripheral seal formed along the perimeter **15.** Said method is characterized in that said welding step is performed in combination with the step of bending the assembly **21** while the assembly **21** advances at a preset adjustable speed between the bending device **22** and the welding device **24.** Advantageously, the method also comprises a step of winding up the metal cavity wall **11** obtained following the welding step onto a device **26** for winding up a sheet metal coil.

In detail, therefore, with the method according to the present invention it is possible to perform welding of the cavity wall with the sheets **14, 18** while they are in a curved state. In particular, the base sheet and the lining sheet, supplied in the form of coils, are unrolled by the respective unwinding devices, and then wound up, once they have been welded together, onto the winding device **26.**

Preferably, the welding step is performed so as to obtain a plurality of metal cavity walls with the same or different dimensions, which are joined together along end portions by means of demarcation lines **66.**

The coil **11a** will be advantageously composed of a plurality of cavity walls. Advantageously, the method according to the present invention may comprise a cutting step for separating the metal cavity walls **11,** said cutting step being performed along the demarcation lines **66.**

Preferably, after carrying out the step of bending the assembly **21** and the step of welding the metal base sheet **14** together with the metal lining sheet **18,** the method also comprises a second bending step for conveying the obtained metal cavity wall **11** towards the winding device **26.**

Advantageously, in the method according to the present invention the step of feeding the metal base sheet **14,** the step of feeding the metal lining sheet **18** and the step of winding up the metal cavity wall **11** are performed using the unwinding devices **12, 16** and the winding devices **26** arranged with their axes vertical. Alternatively, the devices **12, 16, 26** may be arranged with their axes horizontal.

It is now clear how the predefined objects have been achieved.

With the plant **10** it is possible to use as base sheet and lining sheet of the cavity wall sheets in the form of a coil with predefined shapes and dimensions as required. Furthermore, with the plant **10** it is possible to wind up in the form of a coil the cavity wall obtained following welding, so as to occupy a smaller amount of space compared to the known plants which work in the flat condition.

Moreover, the provision of a bending device in the region of the welding device ensures that there is a high degree of welding precision without having to use locking or fixing means.

Furthermore, owing to the possibility of bending the cavity wall soon after welding, it is possible to subject the lining sheet to pulling forces without generating dangerous tensions in the structure of the cavity walls. In particular, the pulling force which the lining sheet undergoes is particularly useful for assisting the bending action which will subsequently be imparted to the cavity wall when the opposite edges of the cavity wall are welded to form the shell of the heat-regulated metal container.

Finally, the possibility of using sheets supplied in the form of coils and of winding up again the obtained cavity wall in the form of a coil means that the processing times may be reduced without affecting the quality of the product, but on the contrary improving its function and making transportation of the cavity walls easier.

Moreover, owing to the bending of the lining sheet performed together with welding thereof on the base sheet, the lining sheet may be easily spaced from the base sheet, so as to obtain a cavity wall with a uniform thickness once the shell has been constructed and the cavity wall has been inflated under pressure.

In particular, the base sheet may be spaced from the lining sheet by introducing air or a special operating liquid without having to use high pressures, therefore reducing mechanical stresses and pressure drops.

Obviously the description given above of embodiments applying the innovative principles of the present invention is provided by way of example of these innovative principles and must therefore not be regarded as limiting the scope of the rights claimed herein. In particular, the characteristic features of the various solutions shown here may be combined with each other according to specific needs and wishes, as may be easily imagined by the person skilled in the art.

## Claims

1. Plant **(10)** for manufacturing metal cavity walls **(11)** consisting of a metal base sheet or primary sheet **(14)** and a metal lining sheet or secondary sheet **(18),** the plant **(10)** comprising:
- a first feeding device **(12)** for the metal base sheet **(14);**
- a second feeding device **(16)** for the metal lining sheet **(18);**
- an apparatus **(20)** for arranging said metal base sheet **(14)** and said metal lining sheet **(18)** superimposed on each other, keeping them pressed together and aligned so as to form an assembly **(21);**
- a bending device **(22)** for bending the assembly **(21)** formed by the metal base sheet **(14)** and the metal lining sheet **(18);**
said plant **(10)** being **characterized in that** it comprises a welding device **(24)** designed to spot-weld or continuously weld together the metal base sheet **(14)** and the metal lining sheet **(18)** along their facing surfaces and along the corresponding perimeter, so as to form a sealed metal cavity wall **(11);** said welding device **(24)** being positioned facing the bending device **(22)** so that the assembly **(21)** formed by the metal base sheet **(14)** and by the metal lining sheet **(18)** is intended, during use, to advance between the bending device **(22)** and the welding device **(24).**

2. Plant **(10)** according to Claim 1, **characterized in that** it comprises a winding device **(26)** for winding up said metal cavity wall **(11),** said winding device **(26)** being positioned downstream of the bending device **(22)** and the welding device **(24).**

3. Plant **(10)** according to Claim 1, **characterized in that** said bending device **(22)** comprises a fixed or movable roll **(50),** a front side roll **(52)** and a rear side roll **(54);** said side rolls **(52, 54)** being arranged on opposite sides of the fixed or movable roll **(50).**

4. Plant **(10)** according to Claim 3, **characterized in that** the fixed or movable roll **(50)** is positioned aligned, relative to a reference axis **(E),** with the welding device **(24).**

5. Plant **(10)** according to Claim 3, **characterized in that** the front side roll **(52)** is arranged on a side for insertion of the assembly **(21)** to be bent in the bending device **(22);** said front side roll **(52)** in combination with the fixed or movable roll **(50)** acting on the assembly **(21)** before welding together of the metal base sheet **(14)** and the metal lining sheet **(18)** is performed.

6. Plant **(10)** according to Claim 5, **characterized in that** the rear side roll **(54)** is arranged on the opposite side to the side for insertion of the assembly **(21)** in the bending device **(22);** said rear side roll **(54)** in combination with the fixed or movable roll **(50)** acting on the cavity wall **(11)** before and after welding together of the metal base sheet **(14)** and the metal lining sheet **(18)** is performed.

7. Plant **(10)** according to Claim 3, **characterized in that** the front side roll **(52)** and the rear side roll **(54)** are mounted movably on a frame **(58)** so as to be able to be displaced away from or towards the fixed or movable roll **(50).**

8. Plant **(10)** according to any one of the preceding claims, **characterized in that** the first feeding device **(12)** and the second feeding device **(16)** comprise a device for unwinding a sheet metal coil; said metal base sheet **(14)** and said metal lining sheet **(18)** being provided in the form of metal coils **(14a, 18a).**

9. Plant **(10)** according to Claim 2, **characterized in that** the winding device **(26)** comprises a device for winding up a sheet metal coil; said metal cavity wall **(11)** exiting the bending device **(22)** being wound up on said winding device **(26)** so as to be supplied in the form of a metal coil **(11a).**

10. Plant **(10)** according to any one of the preceding claims, **characterized in that** said apparatus **(20)** comprises a wrinkle-breaker or alignment device **(38)** and a motorized sheet driving device **(40);** the wrinkle-breaker device **(38)** being located upstream of the motorized sheet driving device **(40).**

11. Plant **(10)** according to Claim 10, **characterized in that** the wrinkle-breaker or alignment device **(38)** is formed by a pair of rolls **(42)** with parallel axes arranged on opposite sides of a support frame **(44).**

12. Plant **(10)** according to Claim 10, **characterized in that** said motorized sheet driving device **(40)** is composed of two cylindrical rolls **(46)** arranged parallel to each other; the distance between respective side surfaces of said cylindrical rolls **(46)** being the same as or less than a thickness **(w)** of the assembly **(21).**

13. Plant **(10)** according to any one of the preceding claims, **characterized in that** it comprises, in addition to a first motorized sheet driving device **(40),** a second motorized sheet driving device **(70)** positioned downstream of the welding device **(22);** said second motorized sheet driving device **(70)** being composed of two cylindrical rolls **(72)** arranged parallel to each other and said metal cavity wall **(11)** being intended to pass between said cylindrical rolls **(72).**

14. Method for manufacturing metal cavity walls **(11)** consisting of a metal base sheet or primary sheet **(14)** and a metal lining sheet or secondary sheet **(18),** said method comprising the following steps:
- feeding the metal base sheet **(14)** by means of a first device **(12)** for unwinding a sheet metal coil **(14a);**
- feeding the metal lining sheet **(18)** by means of a second device **(16)** for unwinding a sheet metal coil **(18a);**
- superimposing the metal base sheet **(14)** and the metal lining sheet **(18),** keeping them pressed and aligned so as to form an assembly **(21);**
- bending the assembly **(21)** formed by the metal base sheet **(14)** and the metal lining sheet **(18)** by means of a bending device **(22);**
- welding the assembly **(21)** by means of a welding device **(24)** so that the metal base sheet **(14)** and the metal lining sheet **(18)** of the assembly **(21)** are spot-welded at points **(17)** or continuously welded together along their facing surfaces and along the corresponding perimeter **(15)** so as to form a sealed metal cavity wall **(11)** of predefined length;
said method being **characterized in that** said welding step is performed in combination with said step of bending the assembly **(21)** while said assembly **(21)** advances at a preset adjustable speed between the bending device **(22)** and the welding device **(24).**

15. Method according to Claim 14, **characterized in that** it comprises a step of winding up the metal cavity wall **(11)** obtained following the welding step onto a device **(26)** for winding up a sheet metal coil.

16. Method according to Claim 15, **characterized in that**, after the step of bending the assembly **(21)** and the step of welding the metal base sheet **(14)** together with the metal lining sheet **(18),** the method comprises a second bending step for conveying the obtained metal cavity wall **(11)** towards the winding device **(26).**

17. Method according to Claim 14, **characterized in that** the step of feeding the metal base sheet **(14),** the step of feeding the metal lining sheet **(18)** and the step of winding-up the metal cavity wall **(11)** are performed using the first unwinding device **(12),** the second unwinding device **(16)** and the winding device **(26),** these being arranged with their axis vertical.

18. Method according to Claim 14, **characterized in that** the welding step is performed so as to obtain a plurality of metal cavity walls with the same or different dimensions, which are joined together along end portions by means of demarcation lines **(66).**

19. Method according to Claim 18, **characterized in that** it comprises a cutting step for separating the metal cavity walls **(11),** said cutting step being performed along the demarcation lines **(66).**
